# EUROPEAN PATENT SPECIFICATION

(11) **EP 3 973 219 B1**
(45) Date of publication and mention of the grant of the patent: **09.04.2025**
(21) Application number: 20808959.9
(22) Date of filing: 13.04.2020
(51) Int. Cl.: F16L 33/32, F16L 33/26, F16L 25/00

(54) **HOSE CONNECTION APPARATUS**
SCHLAUCHVERBINDUNGSVORRICHTUNG
APPAREIL DE RACCORDEMENT DE TUYAU

(30) Priority: 23.05.2019 TR 201907806
(43) Date of publication of application: 30.03.2022
(73) Proprietor: Haci Ayvaz Endüstriyel Mamüller Sanayi ve Ticaret Anonim Sirketi, Beyoglu/Istanbul (TR)
(72) Inventor: AYVAZ, Ohannes, Beyoglu/Istanbul (TR)
(74) Representative: Yamankaradeniz, Kemal
(86) International application number: PCT/TR2020/050313
(87) International publication number: WO 2020/236106

(56) References cited:
- EP-A1- 2 609 356
- WO-A1-2015/199630
- CN-A- 106 958 705
- CN-U- 210 240 872
- ES-A1- 2 557 333
- US-A1- 2006 006 651

## Description

### Technical Field

Invention relates to hose connection apparatus providing interconnection of or connection to related installation of flexible hoses used in all areas such as industry, work place and houses etc.

The invention particularly relates to a hose connection apparatus providing interconnection of flexible metal hoses or their connection to installation and providing sealing during connection thereof.

### Present State of the Art

Today hoses used in industry, houses and work places and providing transfer of fluids and their connections are important in respect to both safety and proper transmission of fluids. In current systems, the hoses are interconnected by apparatus. While the apparatus provide connection, operations cause mistakes. Particularly, position of tightening bushing inside the nut is very important. Tightening bushing is not fixed in the nut in the prior art. Reverse positioning tightening bushing inside nut causes leakage of connection. When it is needed to disconnect set or wrong positioning of tightening bushing inside nut by mistake create mounting errors. Extra labour, cost, installation faults and security failures (gas leakage, liquid leakages etc.) may occur because of both leakage problem and mounting errors. Some studies have been conducted to prevent it but it has been failed to produce permanent solutions to such issues.

In the literature the following applications are seen in relevant to the subject.

National patent application numbered 2013/03902 relates to "an easy connection and sealing apparatus". In the application, it is aimed to fix the tightening bushing inside hut but a clamp like structure is used to do it. Deformation occurs during tightening and loosening of connection apparatus because of fixing by a tab. Due to such problems it is not possible to remove connection apparatus and entire embodiment needs to be replaced. In addition, gasket is used as insulation material and sealing product used in the application. Because of gasket use, the gasket gets old and looses its nature and problems like leaking occur.

Another invention is the European Patent application numbered EP2397739. The application is "connection member for corrugated pipe." The application does not have a gasket causing leakage problems in time. However, wrong mounting failure of bushing during or before mounting may occur because tightening bushing is not fixed in the product.

Another invention is United States patent application with publication number US2006006651 A1. Said invention concerns a fitting for sealed termination of a length of corrugated tubing, especially corrugated stainless steel gas lines, of the type that includes a generally cylindrical fitting body and nut, threaded together on opposite sides of a tubing retainer. Howewer, this application has not extensions on the tightening bush and can't prevent the sealing problem.

Another invention is European Patent application with publication number EP2609356 A1. The present invention relates to a fitting for corrugated metal tubes, for example with parallel coils, of the type comprising a threaded nipple, a tightening collet and a threaded nut. Howewer, this application has not extensions on the tightening bush and does not offer an adequate solution to the sealing problem.

As a result, due to above described disadvantages and inadequacy of existing solutions it has been necessary to make development in the related art.

### Brief Description of the Invention

The present invention relates to hose connection apparatus meeting the needs mentioned above, eliminating all disadvantages and providing some additional advantages.

Primary purpose of the invention is to provide elimination of leakage problem occurring during hoses interconnection or connection to related installation.

Another purpose of the invention is to prevent leaking problems caused by the loss of the feature of the gasket by aging, thanks to the production of hose connection apparatus without gaskets.

A further purpose of the invention is to prevent mounting failures that might occur during hose interconnection or connection to related equipment.

Another purpose of the invention is to prevent waste by replaceable tightening bushing allowing dismantling and re-installation instead of replacement of entire product due to tightening bushing.

The structural and characteristic features and all advantages of the invention will be understood better in the figures given below and the detailed description by reference to the figures. Therefore, the assessment should be made based on the figures and taking into account the detailed descriptions.

### Brief Description of the Drawings

Figure 1 is view of demounted status of hose interconnection apparatus of the invention.
Figure 2 is detailed view of bushing and nut housing of hose connection apparatus of the invention.

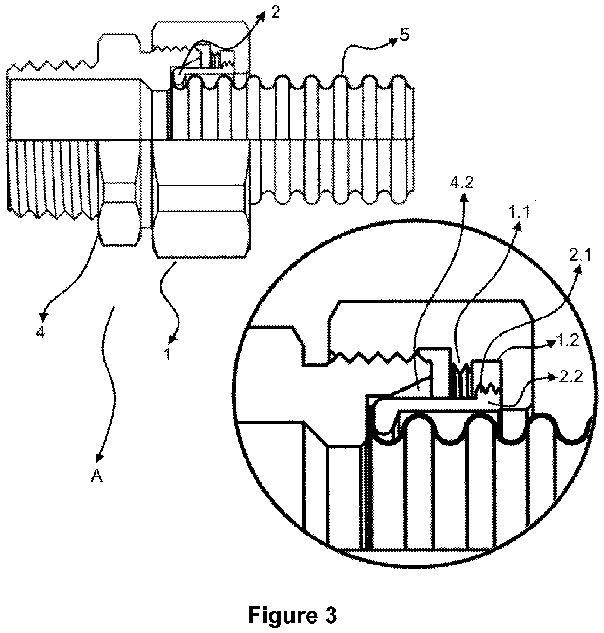

Figure 3 is view showing interconnection of bushing and nut housing of hose connection apparatus of the invention.

The drawings are not necessarily to be scaled and the details not necessary for understanding the present invention might have been neglected. In addition, the components which are equivalent to great extent at least or have equivalent functions at least have been assigned the same number.

### Description of References

1. Nut
1.1. Nut Screw Housing
1.2 Nut Housing
1.3 Nut Thread
2. Tightening Bushing
2.1 Extension-1
2.2 Extension-2
3. Intermediate Bushing
4. Nipple
4.1. Nipple housing
4.2. Tightening surface
5. Hose
A. Hose Connection Apparatus

### Detailed Description of the Invention

In this detailed description, the hose connection apparatus of the invention have been described in a manner not forming any restrictive effect and only for purpose of better understanding of the matter.

The invention is a hose connection apparatus (A) designed for use in connection of flexible and generally metal hoses. Fluid to be transmitted is carried without no leakage by means of said hose connection apparatus (A) without any gasket or sealing member.

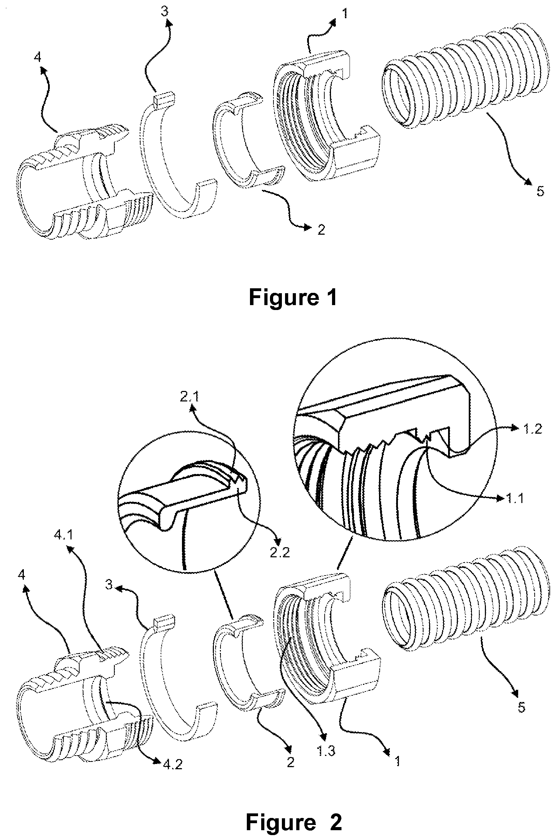

As seen in Figure 1, the invention in its most basic form comprises a nut (1), tightening bushing (2), an intermediate bushing (3), nipple (4), an extension-1 (2.1), an extension-2 (2.2), nut screw housing (1.1) and a nut housing (1.2) to interconnect hoses (5) or connection those connected installation to each other.

As shown in Figure 2, it comprises an extension-1(2.1) and an extension-2 (2.2) on tightening bushing (2) to achieve function of the invention. It is located inside tightening bushing (2) to provide hose (5) connection. The extension-1 (2.1) and the extension-2 (2.2) located on tightening bushing (2) are connected respectively to nut screw housing (1.1) and nut housing (1.2). Said connection is provided by means of circular rotation of the extension-1) inside nut screw housing (1.1) and fitting the extension-2 (2.2) into nut housing (1.2).

Nipple housing (4.1) on the nipple (4) is rotated into Nut Thread (1.39 on the nut (1) and mounted in order to connect hose (5) or interconnect other connection members.

Intermediate bushing (3) is connected onto nipple housing (4.1) between the nut (1) and the nipple (4). By means of this connection, the hose (5) is tightened into by help of tightening bushing (2), nipple (4.1) and nut (1) and mounting is completed. Since tightening surface (4.2) on the lower surface of the nipple (4) narrows down the surface where it is, it narrows the tightening bushing (2) during tightening function. Thus tightening bushing (2) tightly grasps the hose (5) and sealing is provided as there is no space between two joined hoses. After completion of mounting, the intermediate bushing (3) assisting mounting is removed.

## Claims

1. A hose connection apparatus (A) providing connection of hoses (5) or other connection members to each other, comprising a nut (1), a nipple housing (4.1) located on a nipple (4), the nipple housing (4.1) connected by rotating into nut threads (1.3) located on the nut (1), in which the hose (5) is positionable, and further comprising an extension-1 (2.1 ) and an extension-2 (2.2) both located on a tightening bushing (2), wherein the extension-1 and the extension-2 are connected respectively to a nut screw housing (1.1) and a nut housing (1.2), both located inside the nut (1), said connection being provided by means of circular rotation of the extension-1 inside the nut screw housing (1.1) and by means of fitting the extension-2 (2.2) into the nut housing (1.2), and an intermediate bushing (3) located to be connected onto the nipple housing (4.1) between the nut (1) and the nipple (4) and provided to by means of this connection, such that the hose (5) is tightenable into by help of the tightening bushing (2), the nipple housing (4.1) and the nut (1) so as to complete mounting of the hose in the apparatus.

## Patentansprüche

1. Schlauchverbindungsvorrichtung (A) zur Verbindung von Schläuchen (5) oder anderen Verbindungselementen miteinander, umfassend eine Mutter (1), ein Nippelgehäuse (4.1), das sich auf einem Nippel (4) befindet, wobei das Nippelgehäuse (4.1) verbunden wird durch Eindrehen in Mutterngewinde (1.3), die auf der Mutter (1) befindlich sind, worin der Schlauch (5) positionierbar ist, und
ferner umfassend eine Verlängerung-1 (2.1) und eine Verlängerung-2 (2.2), die sich beide auf einer Spannbuchse (2) befinden, wobei die Verlängerung-1 und die Verlängerung-2 jeweils mit einem Mutternschraubgehäuse (1.1) und einem Mutterngehäuse (1.2) verbunden sind, die sich beide im Inneren der Mutter (1) befinden, wobei die Verbindung durch kreisförmige Drehung der Verlängerung-1 im Inneren des Mutternschraubgehäuses (1.1) und durch Einpassen der Verlängerung-2 (2.2) in das Mutterngehäuse (1.2) bereitgestellt wird, und
eine Zwischenbuchse (3), die zur Verbindung an das Nippelgehäuse (4.1) zwischen der Mutter (1) und dem Nippel (4) befindlich ist und mittels dieser Verbindung bereitgestellt wird, sodass der Schlauch (5) mithilfe der Spannbuchse (2), des Nippelgehäuses (4.1) und der Mutter (1) hineinziehbar ist, um so die Montage des Schlauchs in der Vorrichtung abzuschließen.

## Revendications

1. Appareil de raccordement de tuyau (A) assurant le raccordement de tuyaux (5) ou d'autres éléments de raccordement les uns aux autres, comprenant un écrou (1), un boîtier de mamelon (4.1) situé sur un mamelon (4), le boîtier de mamelon (4.1) raccordé par rotation dans des filetages d'écrou (1.3) situés sur l'écrou (1), à l'intérieur duquel le tuyau (5) peut être positionné, et comprenant en outre une extension-1 (2.1) et une extension-2 (2.2) toutes deux situées sur une douille de serrage (2), dans lequel l'extension-1 et l'extension-2 sont raccordées respectivement à un boîtier de vis d'écrou (1.1) et à un boîtier d'écrou (1.2), tous deux situés à l'intérieur de l'écrou (1), ledit raccordement étant assuré au moyen d'une rotation circulaire de l'extension-1 à l'intérieur du boîtier de vis d'écrou (1.1) et au moyen d'un ajustement de l'extension-2 (2.2) dans le boîtier d'écrou (1.2), et une douille intermédiaire (3) située pour être raccordée sur le boîtier de mamelon (4.1) entre l'écrou (1) et le mamelon (4) et prévue au moyen de ce raccord, de sorte que le tuyau (5) puisse être serré à l'aide de la douille de serrage (2), du boîtier de mamelon (4.1) et de l'écrou (1) de façon à achever le montage du tuyau dans l'appareil.
